# EUROPEAN PATENT APPLICATION

(11) **EP 4 506 586 A1**
(43) Date of publication of application: **12.02.2025**
(21) Application number: 23903169.3
(22) Date of filing: 10.11.2023
(51) Int. Cl.: F16F 9/12, F16F 9/14

(54) **ROTARY DAMPER MANUFACTURING METHOD AND ROTARY DAMPER**

(30) Priority: 16.12.2022 JP 2022200927
(71) Applicant: Somic Management Holdings Inc., Sumida-ku Tokyo 130-0004 (JP)
(72) Inventor: NAKAYA Kazumasa, Hamamatsu-shi, Shizuoka 431-2103 (JP)
(74) Representative: Zimmermann, Tankred Klaus
(86) International application number: PCT/JP2023/040590
(87) International publication number: WO 2024/127871

(57) **Abstract**

Provided are a rotary damper manufacturing method capable of assembling a lid with a housing with favorable accuracy and a rotary damper. In the rotary damper manufacturing method, a worker prepares a cylindrical housing body (102), a circular plate-shaped lid (110), and a shaft-shaped rotor (120). An inner peripheral portion of the housing body (102) is formed with a housing-side fitting portion (103) to be fitted onto or into a lid-side fitting portion (111) formed at an outer peripheral portion of the lid (110). In addition, the housing body (102) is made of a material more plastically deformable than that of the lid (110). The lid-side fitting portion (111) of the lid (110) is formed with a groove-shaped recessed portion (112a, 112b). The worker applies pressure to the housing-side fitting portion (103) in a state of the lid-side fitting portion (111) and the housing-side fitting portion (103) being fitted in each other, thereby causing part of the housing-side fitting portion (103) to enter the recessed portion (112a, 112b) and forming an indentation (104a, 104b).

## Description

### TECHNICAL FIELD

The present invention relates to a rotary damper used as a kinetic energy damping device in a turning mechanism of a four-wheeled self-propelling vehicle.

### BACKGROUND ART

Conventionally, there has been known, for example, a rotary damper as a kinetic energy damping device in a turning mechanism of a four-wheeled self-propelling vehicle. For example, in a rotary damper disclosed in Patent Literature 1 below, one opening of a cylindrical housing which houses a reciprocating rotating rotor together with oil is liquid-tightly closed with a flat ring-shaped plug (hereinafter referred to as a "lid").

### CITATION LIST

### PATENT LITERATURE

PATENT LITERATURE 1: JP-A-2014-5883

### SUMMARY OF INVENTION

However, in the rotary damper disclosed in Patent Literature 1 above, a peripheral edge portion of the one opening of the housing is bent inward. With this configuration, the lid is assembled with the housing. This leads to a problem that it is difficult to perform swaging for ensuring liquid tightness and ensuring concentricity with respect to the rotor. In such swaging, the peripheral edge portion is uniformly bent with favorable accuracy while misalignment of the lid is prevented.

The present invention has been made in order to cope with the above-described problem. An object of the present invention is to provide a rotary damper manufacturing method capable of assembling a lid with a housing with favorable accuracy and the rotary damper.

In order to achieve the above object, a feature of the present invention is a rotary damper manufacturing method, a rotary damper including a housing body having a cylindrical inner chamber liquid-tightly housing fluid and a fixed vane formed in a wall shape in the inner chamber and blocking a flow of the fluid in a circumferential direction, a rotor having, at an outer peripheral portion of a shaft, a movable vane turning so as to push the fluid to a fixed vane side while partitioning the inner chamber, and a lid provided on the housing body to liquid-tightly close the inner chamber, the lid having an annular lid-side fitting portion to be fitted into or onto an inner peripheral portion or an outer peripheral portion of the housing body, the housing body having an annular housing-side fitting portion to be fitted onto or into the lid-side fitting portion, one of the lid-side fitting portion or the housing-side fitting portion being made of a material less plastically deformable than that of the other fitting portion, and the one fitting portion being formed with a recessed portion which is recessed to a side away from the other fitting portion and is formed continuously or intermittently along the circumferential direction, the rotary damper manufacturing method including: an indentation formation step of applying pressure over an entire circumference of the other fitting portion more plastically deformable than the one fitting portion in a state of the lid-side fitting portion and the housing-side fitting portion being fitted in each other to plastically deform part of the other fitting portion in a radial direction and cause the part of the other fitting portion to enter the recessed portion, thereby forming an indentation.

According to this configuration, in the rotary damper manufacturing method, the lid-side fitting portion of the lid and the housing-side fitting portion of the housing body are fitted in each other. In this state, the pressure is applied in the radial direction over the entire circumference of the other fitting portion more plastically deformable than the one fitting portion. In this manner, part of the other fitting portion enters the recessed portion, thereby forming the indentation. Thus, misalignment of the lid relative to the housing body is suppressed. Consequently, the lid can be assembled with favorable accuracy.

Further, another feature of the present invention is that in the rotary damper manufacturing method described above, in the indentation formation step, the indentation is formed by applying the pressure to the housing-side fitting portion along the circumferential direction in a state of the lid-side fitting portion being fitted in the inner peripheral portion of the housing-side fitting portion.

According to this configuration, in the rotary damper manufacturing method, the pressure is applied to the housing-side fitting portion along the circumferential direction in a state of the lid-side fitting portion being fitted in the inner peripheral portion of the housing-side fitting portion. In this manner, the indentation is formed. Thus, an increase in the size of the lid is prevented. Consequently, the rotary damper can be formed compact.

Further, still another feature of the present invention is that in the rotary damper manufacturing method described above, in the indentation formation step, the indentation is formed by applying the pressure to the housing-side fitting portion in an axial direction of the housing body.

According to this configuration, in the rotary damper manufacturing method, the pressure is applied to the housing-side fitting portion in the axial direction of the housing. In this manner, the indentation is formed. Thus, the lid can be attached while a decrease in the thickness of the housing-side fitting portion is prevented.

Further, still another feature of the present invention is that in the rotary damper manufacturing method described above, the indentation is formed in the housing-side fitting portion, the housing-side fitting portion is formed so as to project in a flange shape outward in the radial direction from a side surface of the housing body, and in the indentation formation step, the indentation is formed by applying the pressure in a state of the housing-side fitting portion being sandwiched in the axial direction of the housing body.

According to this configuration, in the rotary damper manufacturing method, the housing-side fitting portion projects in the flange shape outward in the radial direction from the side surface of the housing. The pressure is applied in a state of the housing-side fitting portion being sandwiched in the axial direction of the housing. In this manner, the indentation is formed. Consequently, the housing-side fitting portion can be efficiently entered into the recessed portion to form the indentation.

Further, still another feature of the present invention is that in the rotary damper manufacturing method described above, two or more of the recessed portion are formed in an axial direction of the housing body, and the indentation is formed in each of the two or more recessed portions.

According to this configuration, in the rotary damper manufacturing method, the indentation is formed in each of the two or more recessed portions. Thus, the housing and the lid can be more firmly coupled to each other.

Another feature of the present invention is that in the rotary damper manufacturing method, the two or more recessed portions are formed with at least two different depths.

According to this configuration, in the rotary damper manufacturing method, the two or more recessed portions are formed with at least two different depths. Thus, the pressure necessary for forming the indentation can be reduced while coupling force between the housing and the lid is improved. Consequently, a processing burden can be reduced.

Another feature of the present invention is that in the rotary damper manufacturing method, the recessed portion is formed so as to have a smaller sectional area on a far side than on an opening side.

According to this configuration, in the rotary damper manufacturing method, the recessed portion is formed so as to have a smaller sectional area on the far side than on the opening side. Thus, the pressure necessary for forming the indentation is reduced. Consequently, the processing burden can be reduced.

The present invention can be implemented as an invention related to the rotary damper manufacturing method. In addition, the present invention can also be implemented as an invention related to a rotary damper.

Specifically, the rotary damper includes a housing body having a cylindrical inner chamber liquid-tightly housing fluid and a fixed vane formed in a wall shape in the inner chamber and blocking a flow of the fluid in a circumferential direction; a rotor having, at an outer peripheral portion of a shaft, a movable vane turning so as to push the fluid to a fixed vane side while partitioning the inner chamber; and a lid provided on the housing body to liquid-tightly close the inner chamber, in which the lid has an annular lid-side fitting portion to be fitted into or onto an inner peripheral portion or an outer peripheral portion of the housing body, the housing body has an annular housing-side fitting portion to be fitted onto or into the lid-side fitting portion, one of the lid-side fitting portion or the housing-side fitting portion is made of a material less plastically deformable than that of the other fitting portion, the one fitting portion is formed with a recessed portion which is recessed to a side away from the other fitting portion and is formed continuously or intermittently along the circumferential direction, and the other fitting portion enters the recessed portion with part of the other fitting portion deformed, thereby forming an indentation. According to this configuration, the rotary damper can provide features and effects similar to those of the invention related to the rotary damper manufacturing method.

In this case, in the rotary damper, it is simply required that the recessed portion be formed so as to have a smaller sectional area on a far side than on an opening side.

Moreover, in this case, in the rotary damper, it is simply required that two or more of the recessed portion be formed in the axial direction of the housing body. Further, it is simply required that the indentation be formed in each of the two or more recessed portions.

Further, in this case, in the rotary damper, the two or more recessed portions are simply required to be formed with at least two different depths.

Further, in this case, in the rotary damper, the indentation is simply required to be formed in the housing-side fitting portion, and the housing-side fitting portion is simply required to be formed so as to project in a flange shape outward in a radial direction from a side surface of the housing body. With these configurations, the rotary damper can provide features and effects similar to those of the invention related to the rotary damper manufacturing method.

### BRIEF DESCRIPTION OF DRAWINGS

Fig. 1 is a perspective view schematically showing an entire configuration of a rotary damper according to the present invention.
Fig. 2 is an exploded view showing components forming the rotary damper shown in Fig. 1.
Fig. 3 is a sectional view showing the outline of an internal structure of the rotary damper shown in Fig. 1.
Fig. 4 is a partial enlarged view showing, in closeup, a configuration in a dashed circle 3 shown in Fig. 3.
Fig. 5 is a sectional view schematically showing the configuration of an inner chamber formed inside the rotary damper shown in Fig. 1.
Fig. 6 is a side view showing an outer configuration of a lid forming the rotary damper shown in Fig. 1.
Fig. 7 is a sectional view schematically showing the configuration of a lid attachment tool used for a rotary damper manufacturing method according to the present invention.
Fig. 8 is a sectional view showing an actuation state in which a housing body, the lid, and a rotor arranged in the lid attachment tool shown in Fig. 7 are pressed with a lid press and a housing punch.
Fig. 9 is a partial enlarged view of the inside of a dashed circle 8 shown in Fig. 8, and shows a state in which the lid press and the housing punch are lifted in the lid attachment tool shown in Fig. 7.
Fig. 10 is a partial enlarged view of the inside of the dashed circle 8 shown in Fig. 8, and shows a state in which the lid press is lowered to press the lid, and the housing punch is lifted in the lid attachment tool shown in Fig. 7.
Fig. 11 is a partial enlarged view of the inside of the dashed circle 8 shown in Fig. 8, and shows a state in which the lid press presses the lid, and the lowered housing punch punches a housing-side fitting portion in the lid attachment tool shown in Fig. 7.
Fig. 12 is a partial enlarged view of the inside of the dashed circle 8 shown in Fig. 8, and shows a state in which the lid press presses the lid, and the housing punch bites into the housing-side fitting portion in the lid attachment tool shown in Fig. 7.
Fig. 13 is a plan view schematically showing the configuration of another lid attachment tool used for the rotary damper manufacturing method according to the present invention.
Fig. 14 is a sectional view showing the outline of an internal structure of a rotary damper according to a modification of the present invention.
Fig. 15 is a partial enlarged view of the inside of the dashed circle 3 shown in Fig. 3, and shows the outline of an internal structure of a rotary damper according to another modification of the present invention.
Fig. 16 is a partial enlarged view of the inside of the dashed circle 3 shown in Fig. 3, and shows the outline of an internal structure of a rotary damper according to still another modification of the present invention.
Fig. 17 is a sectional view showing the outline of an internal structure of a rotary damper according to still another modification of the present invention.

### DESCRIPTION OF EMBODIMENTS

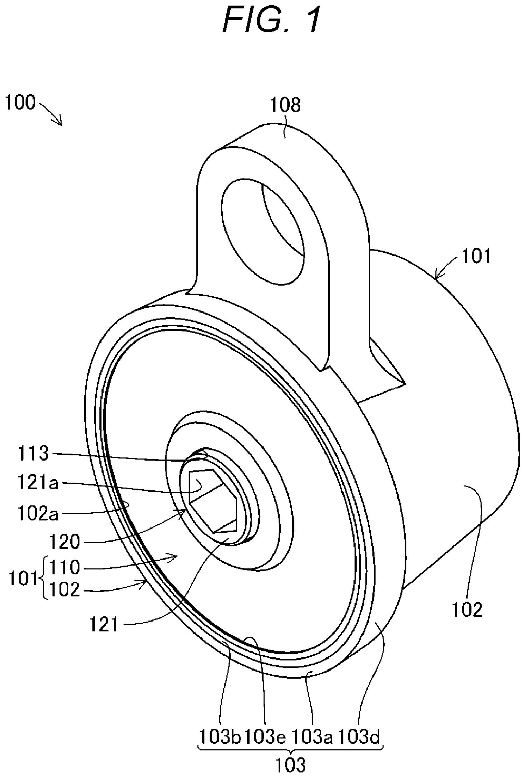

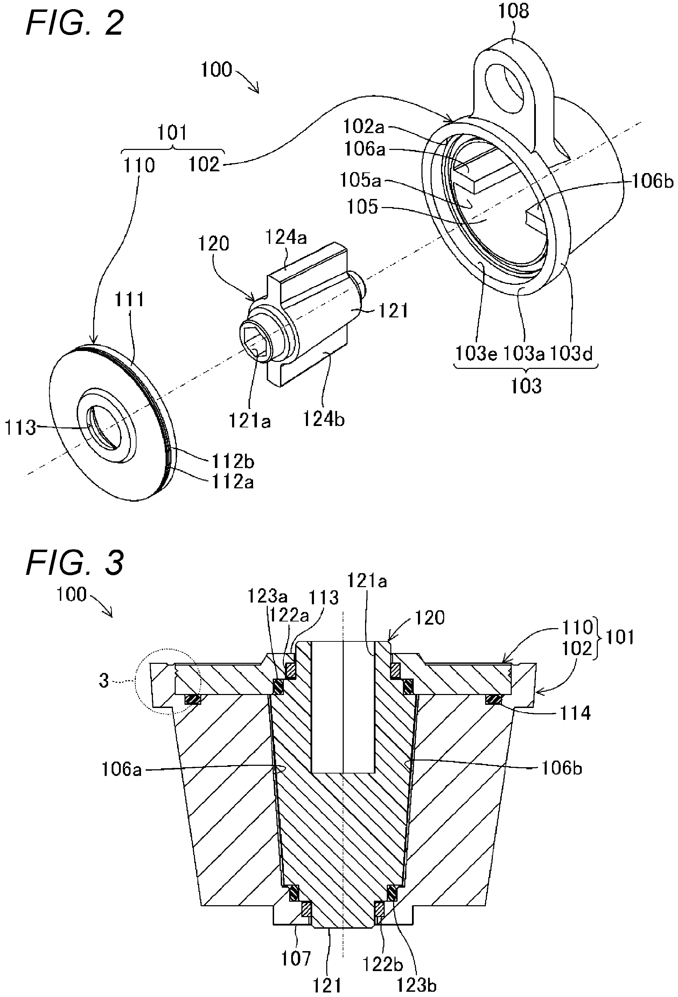

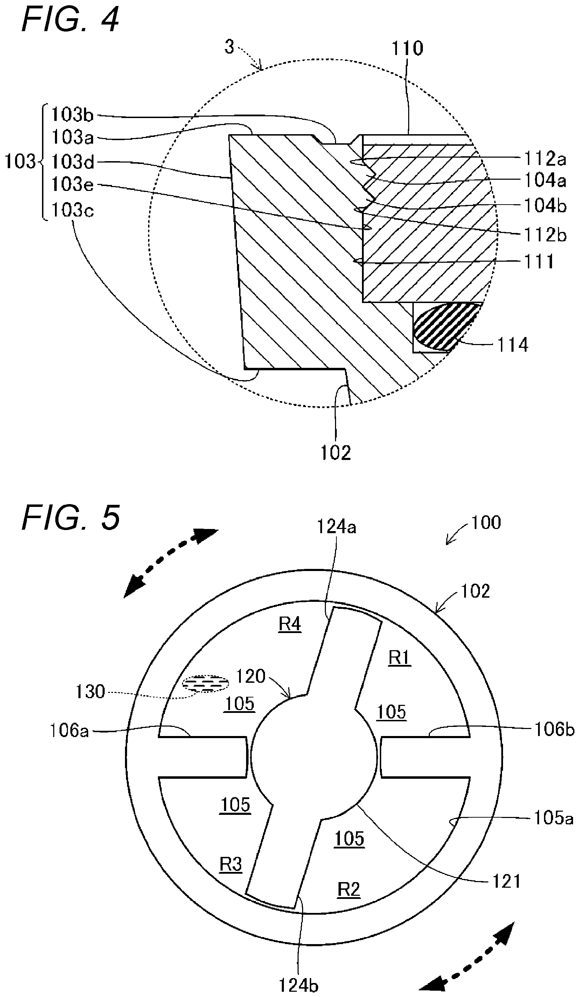

Hereinafter, one embodiment of a rotary damper manufacturing method and a rotary damper according to the present invention will be described with reference to the drawings. Fig. 1 is a perspective view schematically showing an entire configuration of a rotary damper 100. Moreover, Fig. 2 is an exploded view showing components of the rotary damper 100 shown in Fig. 1. Further, Fig. 3 is a sectional view showing the outline of an internal structure of the rotary damper 100 shown in Fig. 1. In addition, Fig. 4 is a partial enlarged view showing, in closeup, a configuration in a dashed circle 3 shown in Fig. 3.

Note that for the sake of easy understanding of the present invention, some components are schematically shown in, e.g., an exaggerated manner in a certain portion of each figure as a reference in the present specification. Thus, e.g., the dimensions of each component and the ratio between the components may vary.

The rotary damper 100 is a damping device attached to one component in a mechanism in which two components tilt relative to each other, such as a reclining seat, an armrest, an ottoman, a glovebox, a tailgate, or a back door of a four-wheeled self-propelling vehicle (e.g., automobile or cart). This damping device damps kinetic energy upon tilting of the other component.

### (Configuration of Rotary Damper 100)

The rotary damper 100 includes a housing 101. The housing 101 is a component rotatably holding a rotor 120 and forming a casing of the rotary damper 100. The rotary damper 100 is made of an aluminum material, an iron material, a zinc material, or various resin materials such as polyamide resin. Specifically, the housing 101 mainly includes a housing body 102 and a lid 110.

The housing body 102 is a component housing movable vanes 124a, 124b of the later-described rotor 120 and fluid 130, respectively. In addition, the housing body 102 rotatably supports one end portion of a shaft 121 of the rotor 120. The housing body 102 is formed in a bottomed cylindrical shape. The bottomed cylinder opens great at one end thereof. In addition, the bottomed cylinder opens small at the other end thereof. More specifically, the housing body 102 is formed such that a housing-side fitting portion 103, an inner chamber 105, and a rotor support portion 107 are connected to each other in this order from the side close to the great opening 102a at the one end of the cylinder.

The lid 110 is attached to the housing-side fitting portion 103. The housing-side fitting portion 103 is a portion configured to hold the lid 110. The housing-side fitting portion 103 is formed in a circular ring shape in plan view. More specifically, the housing-side fitting portion 103 is formed so as to project in a flange shape outward in the radial direction of the housing body 102 from an outer peripheral portion of the housing body 102 at a location where the inner chamber 105 is formed.

In this case, the housing-side fitting portion 103 is formed such that a portion of the housing-side fitting portion 103 corresponding to the portion to which the lid 110 is to be attached projects in a flange shape. In the present embodiment, the housing-side fitting portion 103 is formed with a thickness greater than that of the lid 110. Note that the housing-side fitting portion 103 may be formed with a thickness equal to or less than that of the lid 110. The housing-side fitting portion 103 includes a housing-side fitting portion first end portion 103a, a housing-side fitting portion second end portion 103c, a housing-side fitting portion outer peripheral portion 103d, and a housing-side fitting portion inner peripheral portion 103e.

The housing-side fitting portion first end portion 103a is a portion forming one of both end portions of the housing-side fitting portion 103 in the axial direction thereof. In addition, the housing-side fitting portion first end portion 103a forms the one end portion of the housing body 102. The housing-side fitting portion first end portion 103a is formed in a circular ring shape in plan view. The housing-side fitting portion first end portion 103a is formed with a push-in portion 103b.

The push-in portion 103b is a portion plastically deformed in a recessed shape by pushing a pressing portion 221 of a later-described housing punch 220. The push-in portion 103b is formed in a circular ring recessed shape inverted from a raised shape of the pressing portion 221. The push-in portion 103b is formed at a location adjacent to the opening 102a by work-hardening. With this configuration the lid 110 is more firmly held.

The housing-side fitting portion second end portion 103c is a portion forming the other one of both end portions of the housing-side fitting portion 103 in the axial direction thereof. The housing-side fitting portion second end portion 103c is formed in a circular ring shape in bottom view. The housing-side fitting portion second end portion 103c is received by a housing-side fitting portion receiver 202 of a later-described lid attachment tool 200. With this configuration, part of the housing-side fitting portion 103 easily flows into later-described recessed portions 112a, 112b. Thus, the housing-side fitting portion second end portion 103c is formed on the opposite side of the recessed portions 112a, 112b from the housing-side fitting portion first end portion 103a side. It may be better to form the housing-side fitting portion second end portion 103c in the vicinity of the recessed portions 112a, 112b.

The housing-side fitting portion outer peripheral portion 103d is a portion forming an outer peripheral portion of the housing-side fitting portion 103. In addition, the housing-side fitting portion outer peripheral portion 103d forms part of an outer peripheral portion of the housing body 102. The housing-side fitting portion outer peripheral portion 103d is formed in a circular shape in plan view. The housing-side fitting portion outer peripheral portion 103d is formed in such a tapered shape that the outer diameter thereof continuously decreases from the housing-side fitting portion first end portion 103a side to the housing-side fitting portion second end portion 103c side. Thus, the housing-side fitting portion 103 is formed such that the thickness of the housing-side fitting portion 103 in the radial direction thereof decreases from the housing-side fitting portion first end portion 103a side to the housing-side fitting portion second end portion 103c side.

The housing-side fitting portion inner peripheral portion 103e is a portion forming an inner peripheral portion of the housing-side fitting portion 103. In addition, the housing-side fitting portion inner peripheral portion 103e is configured to hold the lid 110. The housing-side fitting portion inner peripheral portion 103e is formed in a circular shape in plan view. The housing-side fitting portion inner peripheral portion 103e is formed with such an inner diameter that an outer peripheral portion of the lid 110 is fitted therein. In this case, the housing-side fitting portion inner peripheral portion 103e is formed with a straight hole having a constant inner diameter from the housing-side fitting portion first end portion 103a side to the housing-side fitting portion second end portion 103c side. The housing-side fitting portion inner peripheral portion 103e is formed with indentations 104a, 104b.

Each of the indentations 104a, 104b is a portion fitted in a plastically-deformed state in the recessed portion 112a, 112b of the lid 110. Thus, the indentations 104a, 104b are made of a material more plastically deformable than that of a lid-side fitting portion 111 of the lid 110. In the present embodiment, the entirety of the housing body 102 including the indentations 104a, 104b is made of an aluminum material. The indentations 104a, 104b are formed in a circular ring raised shape projecting inward in the radial direction of the housing-side fitting portion 103 from the surface of the housing-side fitting portion inner peripheral portion 103e.

The inner chamber 105 is a space liquid-tightly housing the fluid 130 together with the movable vanes 124a, 124b of the rotor 120. The inner chamber 105 includes two semicylindrical spaces facing each other through the rotor 120 disposed at the center in the housing body 102. In the inner chamber 105, fixed vanes 106a, 106b are each formed integrally with the housing body 102.

As shown in Fig. 5, the fixed vanes 106a, 106b are wall-shaped portions partitioning, together with the rotor 120, the inner chamber 105 into cells R1 to R4. The fixed vanes 106a, 106b are formed along the axial direction of the housing body 102. Moreover, the fixed vanes 106a, 106b project inward in a raised shape from an inner chamber inner peripheral surface 105a. In this case, each of the fixed vanes 106a, 106b is formed such that slight clearances are formed between a tip end portion of the fixed vane 106a, 106b in the radial direction and the outer peripheral surface of the shaft 121 of the rotor 120 and between one (upper side in Fig. 3) end surface of both end portions of the fixed vane 106a, 106b in the axial direction thereof and the lid 110. The fixed vanes 106a, 106b slide through these clearances. With these clearances, the fixed vanes 106a, 106b are configured such that the fluid 130 slightly circulates through these clearances upon rotation of the shaft 121. These two fixed vanes 106a, 106b are provided at locations facing each other in the circumferential direction of the inner chamber inner peripheral surface 105a.

The rotor support portion 107 is a cylindrical portion rotatably supporting the one end portion of the shaft 121 of the rotor 120. The rotor support portion 107 liquid-tightly supports the shaft 121 of the rotor 120 through a seal material which is an O-ring. An attachment piece 108 is formed so as to project outward in the radial direction from an outer peripheral portion of the housing body 102. The attachment piece 108 is attached to one of the two components (not shown) targeted for attachment of the rotary damper 100.

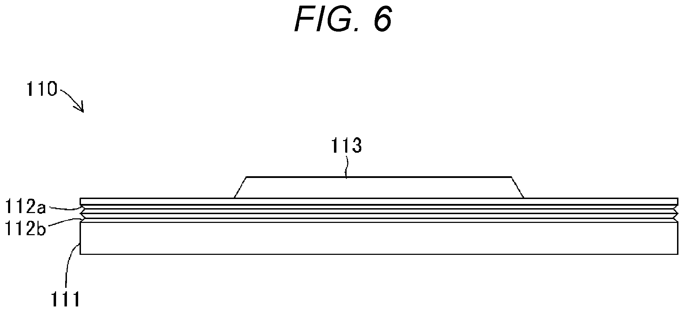

As shown in Fig. 6, the lid 110 is a component liquid-tightly closing the inner chamber 105 formed in the housing body 102. In addition, the lid 110 rotatably supports the rotor 120. The lid 110 is formed in a flat ring shape, and is made of an aluminum material, an iron material, a zinc material, or various resin materials such as polyamide resin. An outer peripheral portion of the lid 110 is formed with the lid-side fitting portion 111. In addition, an inner peripheral portion of the lid 110 is formed with a rotor support portion 113.

The lid-side fitting portion 111 is a portion on which the above-described housing-side fitting portion 103 is to be fitted. The lid-side fitting portion 111 is formed in such a circular ring shape that the lid-side fitting portion 111 is fitted in the housing-side fitting portion 103. The lid-side fitting portion 111 is made of a material less plastically deformable than that of the housing-side fitting portion 103. In the present embodiment, the entirety of the lid 110 including the lid-side fitting portion 111 is made of an iron material (carbon steel). The recessed portions 112a, 112b are formed in the surface of the lid-side fitting portion 111.

Part of the housing-side fitting portion inner peripheral portion 103e enters the recessed portions 112a, 112b to form the indentations 104a, 104b. With this configuration, the lid 110 and the housing body 102 are coupled to each other. The recessed portions 112a, 112b are formed in a continuously-recessed groove shape along the circumferential direction in the surface of the lid-side fitting portion 111. That is, the recessed portions 112a, 112b are formed in a circular ring shape in the outer peripheral portion of the lid 110.

In this case, the recessed portion 112a and the recessed portion 112b are formed at locations adjacent to each other in the axial direction of the lid 110. Moreover, the recessed portions 112a, 112b are formed in a triangular shape such that the sectional area thereof decreases from the opening to the far side. In the present embodiment, each of the recessed portions 112a, 112b is formed such that the sectional shape thereof is a triangular shape with a groove width of about 1 mm and a depth of about 0.5 mm.

The rotor support portion 113 is a portion configured to rotatably support the shaft 121 of the rotor 120. The rotor support portion 113 includes a through-hole penetrating a center portion of the lid 110. A seal material 114 which is an O-ring is provided on the upper end surface of the inner chamber 105 in the housing body 102 in the figure. The lid 110 liquid-tightly closes the inner chamber 105 through the seal material 114.

The rotor 120 is a component disposed in the inner chamber 105 of the housing 101 and partitioning the inner chamber 105 into four spaces which are the cell R1, the cell R2, the cell R3, and the cell R4. In addition, the rotor 120 turns in the inner chamber 105. With this configuration, the volume of each of the cell R1, the cell R2, the cell R3, and the cell R4 increases and decreases. The rotor 120 mainly includes the shaft 121 and the movable vanes 124a, 124b.

The shaft 121 is a bottomed cylindrical portion supporting the movable vanes 124a, 124b. The shaft 121 is made of an aluminum material, an iron material, a zinc material, or various resin materials such as polyamide resin. In this case, both end portions of an outer peripheral portion of the shaft 121 are each slidably fitted and supported in the rotor support portion 107 of the housing body 102 and the rotor support portion 113 of the lid 110 through bearings 122a, 122b, respectively. Moreover, at both end portions of the outer peripheral portion of the shaft 121, seal materials 123a, 123b which are O-rings are provided inside the bearings 122a, 122b, respectively. With this configuration, the inner chamber 105 is liquid-tightly closed.

A bottomed coupling portion 121a is formed in the lid-110-side end surface of the shaft 121. The coupling portion 121a is a portion for connection with the other one of the two components to which the rotary damper 100 is to be attached. In the present embodiment, the coupling portion 121a is formed such that the sectional shape thereof is a hexagonal shape.

The movable vanes 124a, 124b are components partitioning the inner chamber 105 into a plurality of spaces. At the same time, the movable vanes 124a, 124b liquid-tightly increase and decrease the volume of each space. Each of the movable vanes 124a, 124b is formed of a plate-shaped body extending outward in the radial direction of the shaft 121. In this case, a slight clearance is formed between a tip end portion of the movable vane 124a, 124b and the inner chamber inner peripheral surface 105a. Moreover, a slight clearance is formed between the end surface of the movable vane 124a, 124b and the lid 110 on the side close to one (upper side in Fig. 3) of both end portions of the shaft 121 in the axial direction thereof. Further, a slight clearance is formed between the end surface of the movable vane 124a, 124b and the bottom of the housing body 102 on the side close to the other one (lower side in Fig. 3) of both end portions of the shaft 121 in the axial direction thereof. The movable vanes 124a, 124b are formed so as to slide through these clearances. With these clearances, the movable vanes 124a, 124b are configured such that the fluid 130 slightly circulates through these clearances upon rotation of the shaft 121. Moreover, these two movable vanes 124a, 124b are formed so as to extend in opposite directions (in other words, on the same virtual plane) through the shaft 121.

The fluid 130 is a substance providing the movable vanes 124a, 124b turning in the inner chamber 105 with resistance such that the rotary damper 100 fulfills its damper function. The inner chamber 105 is filled with the fluid 130. The fluid 130 includes a liquid, gel, or semisolid substance having flowability. The fluid 130 has viscosity according to the specifications of the rotary damper 100. In this case, the viscosity of the fluid 130 is selected as necessary according to the specifications of the rotary damper 100. In the present embodiment, the fluid 130 includes oil such as mineral oil or silicone oil. Note that in Fig. 5, the fluid 130 is shown only in a hatched region surrounded by a dashed circle.

### (Method for Manufacturing Rotary Damper 100)

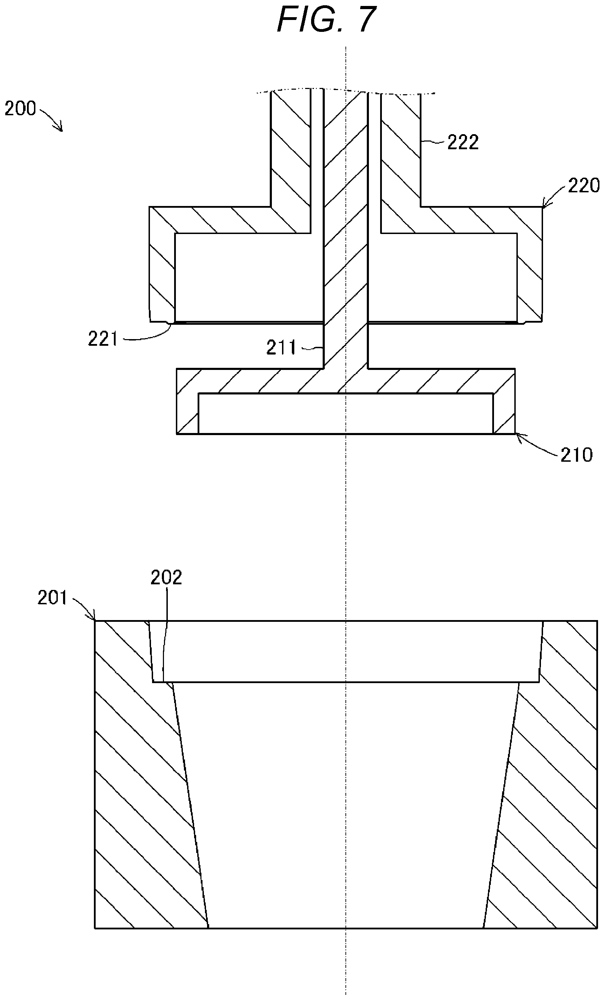

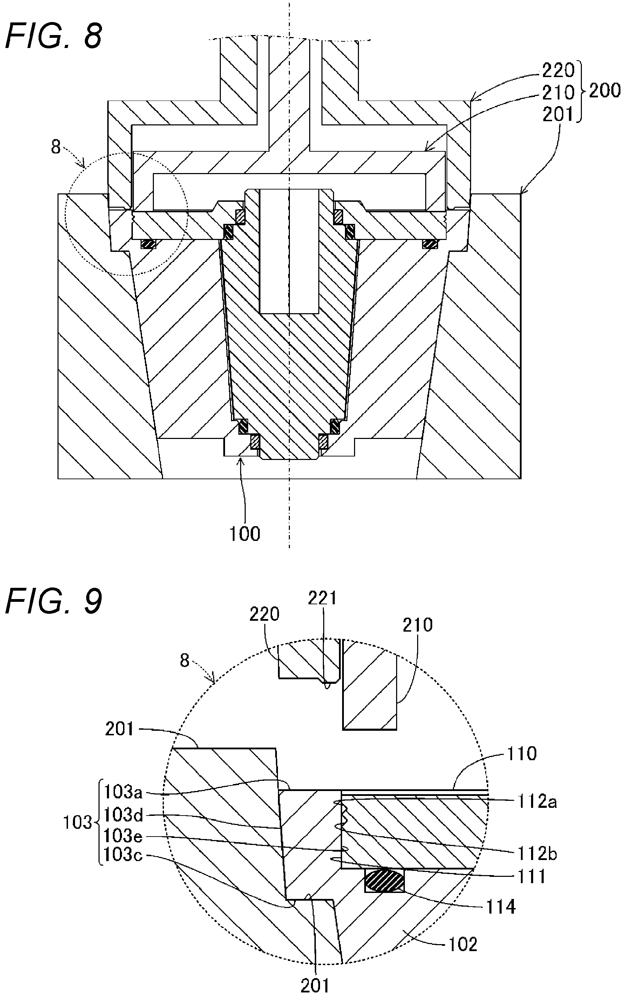

Next, a method for manufacturing the rotary damper 100 configured as described above will be described. The lid attachment tool 200 is used for manufacturing the rotary damper 100. As shown in Figs. 7 and 8, the lid attachment tool 200 is a die for forming the indentations 104a, 104b and attaching the lid 110 to the housing body 102 in a fixed manner. The lid attachment tool 200 is used with loaded in a press machine (not shown). The lid attachment tool 200 mainly includes a housing mount 201, a lid press 210, and the housing punch 220.

The housing mount 201 is a die for holding the housing body 102 while restricting outward deformation of the housing body 102 in the radial direction thereof. The housing mount 201 is formed in a recessed shape inverted from the outer peripheral shape of the housing body 102. Specifically, the housing mount 201 is formed in a tubular shape opening on each of the opening 102a side and rotor support portion 107 side of the housing body 102. An inner peripheral portion of the housing mount 201 is formed with the housing-side fitting portion receiver 202.

The housing-side fitting portion receiver 202 is a portion configured to receive the housing-side fitting portion second end portion 103c of the housing-side fitting portion 103 of the housing body 102. Specifically, the housing-side fitting portion receiver 202 is formed so as to horizontally project in a circular ring shape inward in the radial direction from an inner peripheral portion of the housing mount 201. The housing mount 201 is disposed on a bolster (table) of the press machine.

The lid press 210 is a component configured to press the lid 110 to the housing body 102 side on the housing body 102 loaded in the housing mount 201 to prevent misalignment of the lid 110. Specifically, the lid press 210 is formed in a discoid shape in bottom view. In addition, an outer edge portion of this disk protrudes in a circular ring shape downward in the figure. This portion protruding in the circular ring shape presses an outer edge portion of the lid 110. The lid press 210 is supported by a lifting-lowering mechanism (not shown) of the press machine through an actuation rod 211 extending up and down in the figure. By actuation of this lifting-lowering mechanism, the lid press 210 displaces up and down in the figure. Accordingly, the lid press 210 locks (presses) or unlocks (releases the pressure on) the lid 110.

The housing punch 220 is a component for pressing the housing-side fitting portion 103 of the housing body 102 loaded in the housing mount 201 to form the indentations 104a, 104b. Specifically, the housing punch 220 is formed in a circular ring shape in bottom view. In addition, an outer edge portion of this circular ring protrudes in a circular ring shape downward in the figure. This portion protruding in the circular ring shape presses the housing-side fitting portion first end portion 103a of the housing-side fitting portion 103. In this case, the housing punch 220 is formed with the pressing portion 221 at the tip end surface of the portion protruding in the circular ring shape.

The pressing portion 221 is a portion for concentrically pressing an inner edge portion of the housing-side fitting portion first end portion 103a of the housing-side fitting portion 103. The pressing portion 221 is formed so as to continuously project in a raised shape along the circumferential direction from the lower end surface of the housing-side fitting portion first end portion 103a in the figure. The housing punch 220 is supported by a slide of the not-shown press machine through an actuation rod 222 extending up and down in the figure. The housing punch 220 is driven up and down in the figure by actuation of the press machine. Accordingly, the housing punch 220 punches the housing-side fitting portion first end portion 103a of the housing-side fitting portion 103.

First, a worker prepares each of the housing body 102, the lid 110, and the rotor 120. The housing body 102, the lid 110, and the rotor 120 are produced by well-known machining such as forging, pressing, or cutting. The recessed portions 112a, 112b of the lid 110 are formed by pressing or cutting.

Next, as shown in Fig. 9, the worker loads (arranges) the housing body 102, the lid 110, and the rotor 120 in the housing mount 201. In this case, the worker can arrange the housing body 102, the rotor 120, and the lid 110 in this order in the housing mount 201. Alternatively, the worker may dispose, in the housing mount 201, the housing body 102 in which the rotor 120 and the lid 110 are arranged.

In any case, the lid 110 is disposed in the housing mount 201 with the lid-side fitting portion 111 fitted in the housing-side fitting portion 103 of the housing body 102. Note that the rotor 120 is disposed in the housing body 102 and the lid 110 through the seal material or the bearing. The inner chamber 105 of the housing body 102 is filled with a predetermined amount of fluid 130.

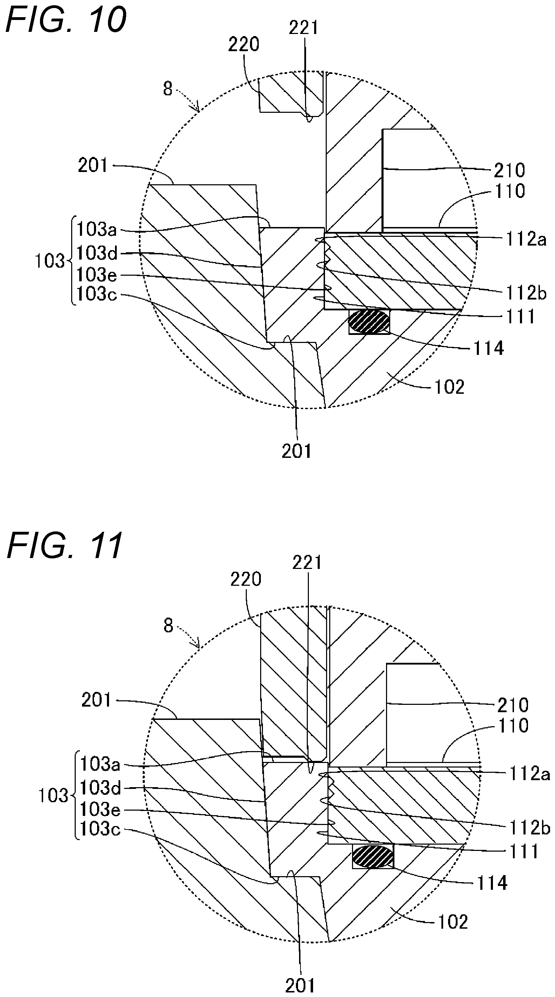

Next, the worker operates the press machine to attach the lid 110 to the housing body 102. Specifically, as shown in Fig. 10, the press machine lowers the lid press 210 to press the upper surface of the lid 110 in the figure, and in this manner, fixes the lid 110. Next, as shown in Fig. 11, the press machine lowers the housing punch 220 to strongly press the housing punch 220 against the housing-side fitting portion first end portion 103a of the housing-side fitting portion 103 of the housing body 102 and push in the housing body 102.

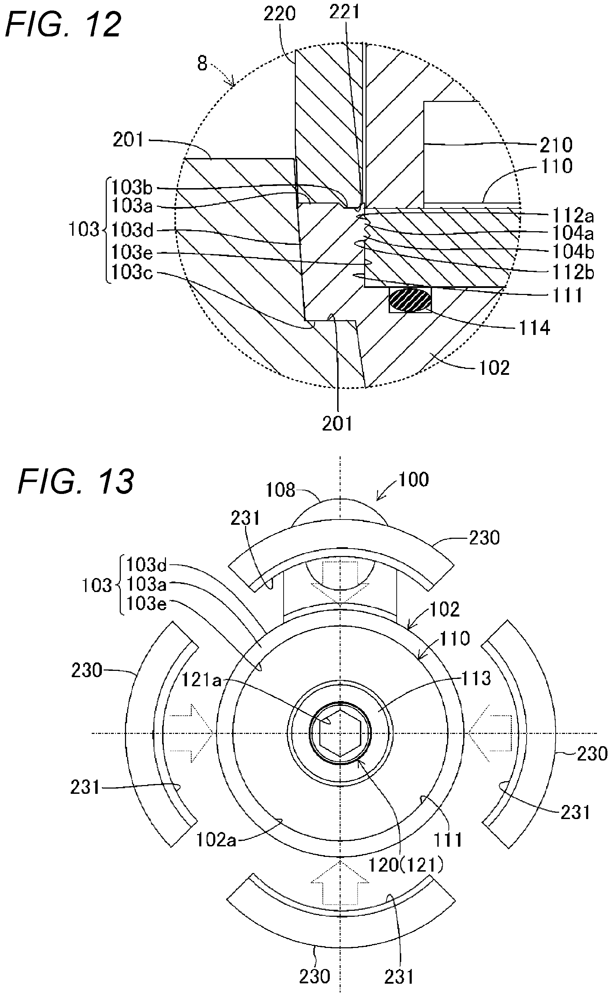

In this case, as shown in Fig. 12, the pressing portion 221 is formed so as to project in the raised shape in the housing punch 220. Thus, the pressing portion 221 deeply bites into the housing-side fitting portion first end portion 103a. Then, the pressing portion 221 forms the push-in portion 103b in the housing-side fitting portion first end portion 103a. Accordingly, part of the housing-side fitting portion 103 of the housing body 102 enters, by plastic deformation, each of the recessed portions 112a, 112b of the lid 110 through the housing-side fitting portion inner peripheral portion 103e. In this manner, the indentations 104a, 104b are formed. A step of part of the housing-side fitting portion 103 entering each of the recessed portions 112a, 112b by plastic deformation and forming the indentations 104a, 104b is equivalent to an indentation formation step according to the present invention.

As a result, the lid 110 is fixed to the housing-side fitting portion 103 of the housing body 102. In this case, the lid 110 receives uniform pressing force from the housing-side fitting portion inner peripheral portion 103e of the housing-side fitting portion 103 over the entire circumference of the outer peripheral portion. Thus, the lid 110 is coupled to the housing body 102 with no misalignment. Immediately after having punched the housing punch 220 against the housing-side fitting portion 103, the press machine lifts the housing punch 220. After the press machine has lifted the housing punch 220, the lid press 210 is lifted to release the pressed state of the lid 110. In this manner, a process of attaching the lid 110 to the housing body 102 ends.

Next, the worker takes the rotary damper 100, which has the rotor 120 and the lid 110 assembled with the housing body 102, out of the housing mount 201. In this manner, a process of assembling the rotary damper 100 ends. Thereafter, the rotary damper 100 is completed through an inspection step etc. The inspection step etc. are not directly related to the present invention. Thus, description of these steps will be omitted.

### (Actuation of Rotary Damper 100)

Next, actuation of the rotary damper 100 configured as described above will be described. The rotary damper 100 is provided between the two components turning relative to each other. When one of the two components turns relative to the other component, the rotary damper 100 generates damping force. Specifically, the rotary damper 100 is attached to one of the two components turning relative to each other through the coupling portion 121a. In addition, the rotary damper 100 is attached to the other component through the attachment piece 108. When the one and other components turn relative to each other, the rotor 120 turns relative to the housing 101 (see dashed arrows in Fig. 5) in the rotary damper 100. This generates the damping force.

In this case, in the rotary damper 100, the lid 110 rotatably supporting the one end portion of the shaft 121 of the rotor 120 is also attached to the housing body 102 with no misalignment. Thus, the rotor 120 can turn with favorable accuracy without degradation of the liquid tightness and flowability of the fluid 130.

Note that needless to say, the rotary damper 100 can also be used with attached to a device or a tool other than an automobile, specifically a door opening-closing mechanism, a mechanical device other than a self-propelling vehicle, an electric device, a tool, or furniture, as an object to which the rotary damper 100 is to be attached.

As can be understood from description of the actuation method above, according to the method for manufacturing the rotary damper 100 in the above-described embodiment, pressure is applied in the radial direction over the entire circumference of the housing-side fitting portion 103 more plastically deformable than the lid-side fitting portion 111 in a state of the lid-side fitting portion 111 of the lid 110 and the housing-side fitting portion 103 of the housing body 102 being fitted in each other. Accordingly, part of the housing-side fitting portion 103 enters the recessed portions 112a, 112b, thereby forming the indentations 104a, 104b. Thus, misalignment of the lid 110 relative to the housing body 102 can be suppressed, and the lid 110 can be assembled with favorable accuracy.

Implementation of the present invention is not limited to the above-described embodiment, and various changes can be made without departing from the object of the present invention. Note that in description of each modification, the same reference numerals will be used to represent elements similar to those of the above-described embodiment. Moreover, overlapping description will be omitted.

For example, in the above-described embodiment, the housing punch 220 of the lid attachment tool 200 has the pressing portion 221 protruding in the raised shape. However, the housing punch 220 may have a flat surface without the pressing portion 221 which is the portion configured to press the housing-side fitting portion first end portion 103a. With this configuration, the housing-side fitting portion first end portion 103a can be punched with the entirety of the flat surface. The pressing portion 221 may be provided not continuously but intermittently in the circumferential direction.

In the above-described embodiment, the lid attachment tool 200 includes the lid press 210. However, the lid attachment tool 200 may be configured without the lid press 210. In this case, it is preferable that the housing-side fitting portion 103 and lid-side fitting portion 111 of the rotary damper 100 are fitted in each other in a stronger fitting state (e.g., interference fit).

In the above-described embodiment, the lid attachment tool 200 is configured such that the housing punch 220 presses the housing-side fitting portion first end portion 103a of the housing-side fitting portion 103. That is, the lid attachment tool 200 is configured to press the housing-side fitting portion 103 in the axial direction of the housing body 102. However, the lid attachment tool 200 may be configured to press the housing-side fitting portion 103 in the radial direction of the housing body 102.

For example, Fig. 13 shows four housing punches 230 arranged outside in the radial direction of the housing body 102 with respect to the housing-side fitting portion 103. A tip end portion of each of these housing punches 230 is formed with a pressing portion 231 having a triangular sectional shape and projecting in a raised shape. These four housing punches 230 displace inward in the radial direction to press the housing-side fitting portion outer peripheral portion 103d of the housing-side fitting portion 103 from the outside in the radial direction of the housing body 102. Accordingly, part of the housing-side fitting portion 103 enters the recessed portions 112a, 112b, thereby forming the indentations 104a, 104b.

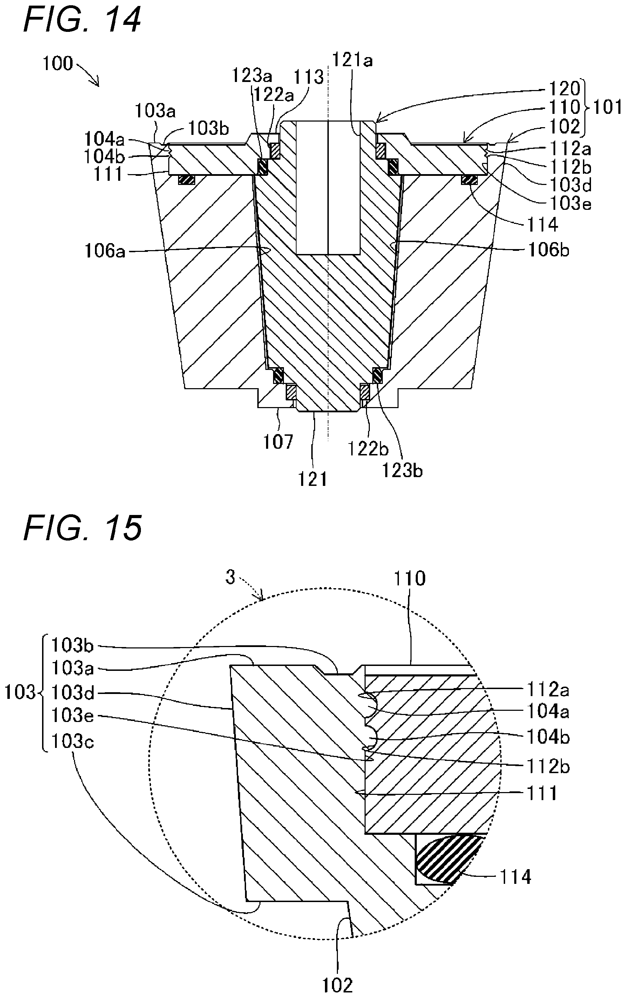

In the above-described embodiment, the portion of the housing body 102 in which the lid 110 is to be fitted projects in the flange shape outward in the radial direction to form the housing-side fitting portion 103. With this configuration, part of the housing-side fitting portion 103 is plastically deformed to the recessed portion 112a, 112b side by punching with the housing punches 230 in a state of the housing mount 201 receiving the housing body 102. The lid attachment tool 200 is configured to easily form the indentations 104a, 104b as described above. However, the housing body 102 is not necessarily formed with the housing-side fitting portion 103 which projects in the flange shape. For example, as shown in Fig. 14, the housing-side fitting portion 103 does not project in the axial direction, and the housing body 102 may be formed of a cylinder having a continuous flat surface.

In the above-described embodiment, the recessed portions 112a, 112b are formed in the groove shape continuously extending along the circumferential direction of the lid 110. However, the recessed portions 112a, 112b may be formed in a groove shape or a bottomed hole shape intermittently formed along the circumferential direction of the lid 110.

In the above-described embodiment, the two recessed portions 112a, 112b are formed side by side in the axial direction of the housing body 102 in the side surface of the lid 110. However, in the side surface of the lid 110, at least one of the recessed portions 112a, 112b may be formed. Alternatively, three or more recessed portions may be formed side by side in the axial direction of the housing body 102.

In the above-described embodiment, the recessed portions 112a, 112b having the same depth are formed. However, the recessed portions 112a, 112b having different depths may also be formed. In this case, the recessed portions 112a, 112b are formed such that the depth of the recessed portion (e.g., recessed portion 112b) relatively away from the housing punch 230 is less than the depth of the recessed portion (e.g., recessed portion 112a) relatively closer to the housing punch 230. With this configuration, the pressing force of the housing punch 230 can be reduced. Moreover, a processing burden can be reduced.

In the above-described embodiment, the recessed portions 112a, 112b having the triangular sectional shape are formed so as to have a smaller sectional area on the far side than on the opening side. With this configuration, the pressure of the lid 110 necessary for forming the indentations 104a, 104b can be reduced. Moreover, the processing burden can be reduced. However, as shown in Fig. 15, the recessed portions 112a, 112b having a curved sectional shape such as a semicircular shape may be formed so as to have a smaller sectional area on the far side than on the opening side. The deepest portions of the recessed portions 112a, 112b are formed with the curved surfaces as described above, so that the filling rate of the indentations 104a, 104b can be enhanced. In addition, damage of the recessed portions 112a, 112b, such as cracking, can be reduced.

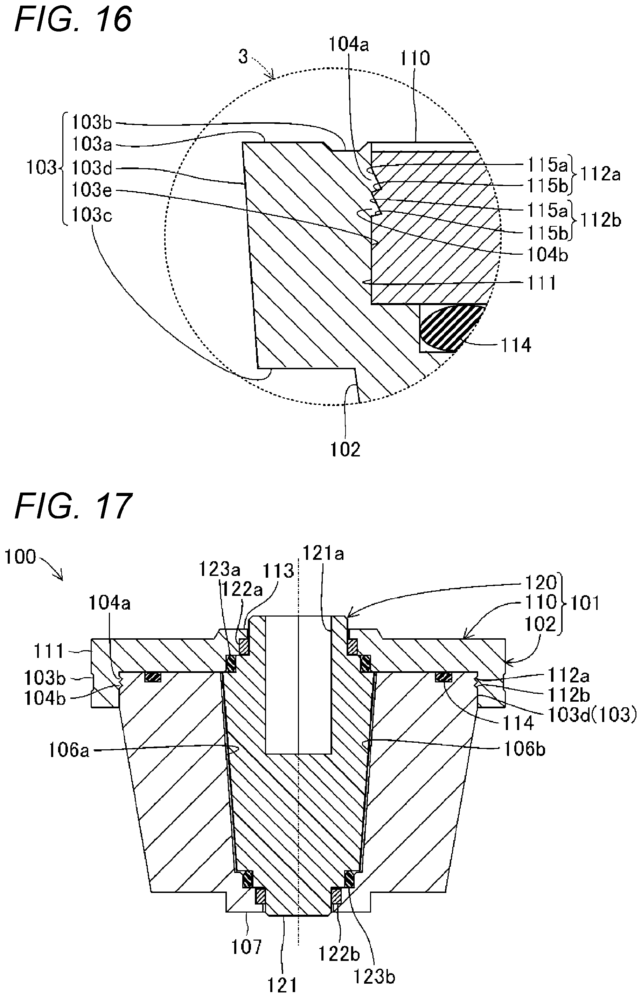

The recessed portions 112a, 112b having a rectangular sectional shape with a constant sectional area from the opening side to the far side may be formed. As shown in Fig. 16, the recessed portions 112a, 112b may have such a triangular sawtooth sectional shape that the sectional area thereof is less on the far side than on the opening side. With this sectional shape, a side 115b on the housing-side fitting portion second end portion 103c side out of two adjacent sides 115a, 115b is formed at right angle to the axial direction of the housing body 102 or at acute angle to the axial direction on the housing-side fitting portion second end portion 103c side. In addition, the side 115a on the housing-side fitting portion first end portion 103a side is formed at acuate angle to the axial direction of the housing body 102 on the housing-side fitting portion second end portion 103c side. With this configuration, the lid 110 can be made less likely to come off.

In the above-described embodiment, the lid 110 is configured to be fitted in the opening 102a of the housing body 102. That is, in the configuration of the rotary damper 100, the housing-side fitting portion 103 is formed in the tubular shape. In addition, the lid-side fitting portion 111 is formed in the discoid shape. With this configuration, the outer peripheral portion of the lid-side fitting portion 111 is fitted in the inner peripheral portion of the housing-side fitting portion 103. However, as shown in Fig. 17, the housing-side fitting portion 103 is formed in a columnar shape or a tubular shape. In addition, the lid-side fitting portion 111 is formed in a tubular shape having a size that allows itself to be fitted onto the outer side of the housing-side fitting portion 103. As described above, the rotary damper 100 can also be configured such that the inner peripheral portion of the lid-side fitting portion 111 is fitted onto the outer peripheral portion of the housing-side fitting portion 103. In this case, the recessed portions 112a, 112b of the rotary damper 100 are formed in the housing-side fitting portion outer peripheral portion 103d. In addition, the indentations 104a, 104b are formed in the lid-side fitting portion 111. Thus, the worker presses the lid-side fitting portion 111 from the outside in the radial direction. Alternatively, the worker restricts the radially outer side of the lid-side fitting portion 111 with a die (not shown) and presses the lid-side fitting portion 111 in the axial direction. This operation allows the indentations 104a, 104b to enter the recessed portions 112a, 112b.

The lid 110 of the rotary damper 100 is simply required to be made of a material (e.g., aluminum material) more plastically deformable than that of the housing body 102. In addition, the housing body 102 is simply required to be made of a material (e.g., carbon steel) less plastically deformable than that of the lid 110. In this case, the recessed portions 112a, 112b are formed in advance in the housing-side fitting portion outer peripheral portion 103d of the housing-side fitting portion 103 of the housing body 102. Then, the lid attachment tool 200 presses the lid-side fitting portion 111 of the lid 110 in the axial direction or inward in the radial direction. Accordingly, part of the lid-side fitting portion 111 enters the recessed portions 112a, 112b. In this manner, the indentations 104a, 104b are formed. As a result, the lid 110 can be attached to the housing body 102.

### LIST OF REFERENCE NUMBERS

R1 to R4 Cell
100 Rotary Damper
101 Housing
102 Housing Body
102a Opening
103 Housing-Side Fitting Portion
103a Housing-Side Fitting Portion First End Portion
103b Push-In Portion
103c Housing-Side Fitting Portion Second End Portion
103d Housing-Side Fitting Portion Outer Peripheral Portion
103e Housing-Side Fitting Portion Inner Peripheral Portion
104a, 104b Indentation
105 Inner Chamber
105a Inner Chamber Inner Peripheral Surface
106a, 106b Fixed Vane
107 Rotor Support Portion
108 Attachment Piece
110 Lid
111 Lid-Side Fitting Portion
112a, 112b Recessed Portion
113 Rotor Support Portion
114 Seal Material
115a, 115b Two Sides Forming Recessed Portion
120 Rotor
121 Shaft
121a Coupling Portion
122a, 122b Bearing
123a, 123b Seal Material
124a, 124b Movable Vane
130 Fluid
200 Lid Attachment Tool
201 Housing Mount
202 Housing-Side Fitting Portion Receiver
210 Lid Press
211 Actuation Rod
220 Housing Punch
221 Pressing Portion
222 Actuation Rod
230 Housing Punch
231 Pressing Portion

## Claims

1. A rotary damper manufacturing method,
a rotary damper including a housing body having a cylindrical inner chamber liquid-tightly housing fluid and a fixed vane formed in a wall shape in the inner chamber and blocking a flow of the fluid in a circumferential direction, a rotor having, at an outer peripheral portion of a shaft, a movable vane turning so as to push the fluid to a fixed vane side while partitioning the inner chamber, and a lid provided on the housing body to liquid-tightly close the inner chamber,
the lid having an annular lid-side fitting portion to be fitted into or onto an inner peripheral portion or an outer peripheral portion of the housing body,
the housing body having an annular housing-side fitting portion to be fitted onto or into the lid-side fitting portion,
one of the lid-side fitting portion or the housing-side fitting portion being made of a material less plastically deformable than that of the other fitting portion, and
the one fitting portion being formed with a recessed portion which is recessed to a side away from the other fitting portion and is formed continuously or intermittently along the circumferential direction, the rotary damper manufacturing method comprising:
an indentation formation step of applying pressure over an entire circumference of the other fitting portion more plastically deformable than the one fitting portion in a state of the lid-side fitting portion and the housing-side fitting portion being fitted in each other to plastically deform part of the other fitting portion in a radial direction and cause the part of the other fitting portion to enter the recessed portion, thereby forming an indentation.

2. The rotary damper manufacturing method according to claim 1, wherein
in the indentation formation step, the indentation is formed by applying the pressure to the housing-side fitting portion along the circumferential direction in a state of the lid-side fitting portion being fitted in the inner peripheral portion of the housing-side fitting portion.

3. The rotary damper manufacturing method according to claim 2, wherein
in the indentation formation step, the indentation is formed by applying the pressure to the housing-side fitting portion in an axial direction of the housing body.

4. The rotary damper manufacturing method according to claim 3, wherein
the indentation is formed in the housing-side fitting portion,
the housing-side fitting portion is formed so as to project in a flange shape outward in the radial direction from a side surface of the housing body, and
in the indentation formation step, the indentation is formed by applying the pressure in a state of the housing-side fitting portion being sandwiched in the axial direction of the housing body.

5. The rotary damper manufacturing method according to claim 2, wherein
two or more of the recessed portion are formed in an axial direction of the housing body, and
the indentation is formed in each of the two or more recessed portions.

6. The rotary damper manufacturing method according to claim 5, wherein
the two or more recessed portions are formed with at least two different depths.

7. The rotary damper manufacturing method according to claim 1, wherein
the recessed portion is formed such that a sectional area thereof is less on a far side than on an opening side.

8. A rotary damper comprising:
a housing body having a cylindrical inner chamber liquid-tightly housing fluid and a fixed vane formed in a wall shape in the inner chamber and blocking a flow of the fluid in a circumferential direction;
a rotor having, at an outer peripheral portion of a shaft, a movable vane turning so as to push the fluid to a fixed vane side while partitioning the inner chamber; and
a lid provided on the housing body to liquid-tightly close the inner chamber,
wherein the lid has an annular lid-side fitting portion to be fitted into or onto an inner peripheral portion or an outer peripheral portion of the housing body,
the housing body has an annular housing-side fitting portion to be fitted onto or into the lid-side fitting portion,
one of the lid-side fitting portion or the housing-side fitting portion is made of a material less plastically deformable than that of the other fitting portion,
the one fitting portion is formed with a recessed portion which is recessed to a side away from the other fitting portion and is formed continuously or intermittently along the circumferential direction, and
the other fitting portion enters the recessed portion with part of the other fitting portion deformed, thereby forming an indentation.

9. The rotary damper according to claim 8, wherein
the recessed portion is formed such that a sectional area thereof is less on a far side than on an opening side.

10. The rotary damper according to claim 8, wherein
two or more of the recessed portion are formed in an axial direction of the housing body, and
the indentation is formed in each of the two or more recessed portions.

11. The rotary damper according to claim 10, wherein
the two or more recessed portions are formed with at least two different depths.

12. The rotary damper according to claim 8, wherein
the indentation is formed in the housing-side fitting portion, and
the housing-side fitting portion is formed so as to project in a flange shape outward in a radial direction from a side surface of the housing body.
